# EUROPEAN PATENT APPLICATION

(11) **EP 4 485 629 A1**
(43) Date of publication of application: **01.01.2025**
(21) Application number: 22934282.9
(22) Date of filing: 31.03.2022
(51) Int. Cl.: H01M 50/103, H01M 50/176, H01M 50/202

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHANG, Guowen, Ningde, Fujian 352100 (CN); MA, Wu, Ningde, Fujian 352100 (CN); HAO, Shengyu, Ningde, Fujian 352100 (CN)
(74) Representative: Icosa
(86) International application number: PCT/CN2022/084677
(87) International publication number: WO 2023/184445

(57) **Abstract**

This application relates to the field of electrochemical devices and discloses an electrochemical device and an electronic device. The electrochemical device includes a housing, an electrode assembly, a first metal sheet, and a first conductive terminal. The housing includes a first housing, and the first housing forms a first accommodation cavity. The electrode assembly is accommodated in the first accommodation cavity. The first metal sheet includes a first portion and a second portion, the first portion is accommodated in the first accommodation cavity and electrically connected to the electrode assembly, and the second portion extends outside the first housing. The first conductive terminal is provided on the housing and exposed relative to an outer surface of the housing, the first conductive terminal is electrically connected to a portion of the second portion extending outside the first housing, and the electrochemical device achieves current leading-in or leading-out through the first conductive terminal. The electrochemical device achieves the current leading-in or leading-out by using the first conductive terminal instead of the first metal sheet, i.e., by connecting to an external power utilization load through the first conductive terminal, and thus, the problem that the first metal sheet is prone to damage due to use of the first metal sheet for connection can be alleviated.

## Description

### TECHNICAL FIELD

This application relates to the technical field of energy storage, and in particular, to an electrochemical device and an electronic device.

### BACKGROUND

An electrochemical device is an apparatus that converts external energy into electrical energy and stores the external energy internally, so as to supply power to external equipment (such as portable electronic devices) at the time of need. At present, the electrochemical device is widely used in products such as mobile phones, tablets, laptops, energy storage devices, and electric devices.

The electrochemical device includes a housing, an electrode assembly and a metal sheet, where the housing is provided with an accommodation cavity, and the electrode assembly is accommodated in the accommodation cavity. The metal sheet, also known as a tab, is electrically connected to the electrode assembly; and the metal sheet is used to connect with a power utilization load.

When the electrochemical device is applied to an electronic device, it needs to be electrically connected to other components through the metal sheet. Due to relatively low strength of the metal sheet, the metal sheet is prone to damage or even breakage when the electrochemical device needs to be mounted into or removed from the electronic device multiple times.

### SUMMARY

Embodiments of this application aim to provide an electrochemical device and an electronic device, so as to alleviate the problem that a metal sheet in the electrochemical device is prone to damage.

Embodiments of this application adopt the following technical solutions to solve the technical problems thereof.

In a first aspect, this application provides an electrochemical device. The electrochemical device includes a housing, an electrode assembly, a first metal sheet, and a first conductive terminal. The housing includes a first housing, and the first housing forms a first accommodation cavity. The electrode assembly is accommodated in the first accommodation cavity. The first metal sheet includes a first portion and a second portion, the first portion is accommodated in the first accommodation cavity and electrically connected to the electrode assembly, and the second portion extends outside the first housing. The first conductive terminal is provided on the housing and exposed relative to an outer surface of the housing, the first conductive terminal is electrically connected to a portion of the second portion extending outside the first housing, and the electrochemical device achieves current leading-in or leading-out through the first conductive terminal.

The electrochemical device provided in embodiments of this application achieves the current leading-in or leading-out by using the first conductive terminal instead of the first metal sheet, i.e., the electrochemical device is connected to an external power utilization load through the first conductive terminal, and thus, the problem that the first metal sheet is prone to damage due to use of the first metal sheet for connection can be alleviated. In addition, the second portion of the first metal sheet is connected to the first conductive terminal at an exterior of the first housing, so the connection process of the two is less interfered by a wall portion of the first accommodation cavity and other components within the first accommodation cavity.

In some embodiments, the first housing has a first wall portion, and the second portion extends outside the first accommodation cavity from the first wall portion. The housing further includes a second housing connected to the first housing, the second housing and the first wall portion define a second accommodation cavity, and the second portion is provided within the second accommodation cavity. The second housing has a second outer surface, the second outer surface is a surface of the second housing facing away from the second accommodation cavity. The first conductive terminal is provided on the second housing, and the first conductive terminal is disposed exposed relative to the second outer surface. In this way, the second housing isolates the first conductive terminal from an external environment of the electrochemical device, thus making the second portion and a fourth portion less susceptible to collisions from external objects.

In some embodiments, the second housing is fixedly connected to the first housing. For example, the second housing is in interference fit with the first housing, and at the same time, a sealing element is provided at a junction between the second housing and the first housing. Additionally, for example, the second housing and the first housing are fixed only by interference fit. For example, the second housing and the first housing are fixed only by adhesive bonding.

In some embodiments, the first wall portion has a first outer surface, and the first outer surface is a surface of the first wall portion facing away from the first accommodation cavity, and the second housing covers the first outer surface. In this way, the second housing and the first housing are connected in a continuous shape.

In some embodiments, a thickness of the first metal sheet ranges from 50 µm to 500 µm. The setting of the thickness not less than 50 µm aims to enable the first metal sheet to have a sufficient thickness to reduce the risk that the first metal sheet is easily broken due to too low strength on the one hand, and to have an appropriate overcurrent capacity on the other hand, so as to meet the overcurrent requirement of the electrochemical device. The setting of the thickness not higher than 500 µm aims to alleviate the problem of an excessive thickness of the first metal sheet, which makes it difficult for the first metal sheet to bend flexibly; and at the same time, the setting can also improve to some extent the deficiency that space available for the electrode assembly is reduced due to the excessive thickness of the first metal sheet, thereby leading to a lower energy density in the electrochemical device.

In some embodiments, the first metal sheet is strip-shaped, and a length-width ratio of the first metal sheet ranges from 5:1 to 20: 1. The length-width ratio of the first metal sheet within the above range aims to provide the first metal sheet with an appropriate length, so that on the one hand, the first metal sheet can extend to an exterior of the first housing from a first electrode plate, thereby facilitating connection with the above first conductive terminal without extending too much length out of the first housing.

In some embodiments, the first conductive terminal includes a first base portion and a first extension portion connected to the first base portion, the first base portion is fixed to the second housing and electrically connected to the second portion, the first extension portion is provided on a side of the first base portion facing away from the first housing, and the first extension portion is provided exposed with respect to the second outer surface. In this way, the electrochemical device can be connected to the power utilization load through the first extension portion.

In some embodiments, the first conductive terminal is in a broken ring shape and includes a first base portion, a first connection portion and a first extension portion connected in sequence, the first base portion is connected to the second portion, the first connection portion is in a curved shape, the first extension portion is provided opposite to the first base portion and is provided on a side of the first base portion facing away from the first wall portion, and the first extension portion is provided exposed relative to the second outer surface. In this way, the electrochemical device can be connected to the power utilization load through the first extension portion.

In some embodiments, the first conductive terminal is integrated with the second housing. The integrated setting mode of the first conductive terminal and the second housing makes the first conductive terminal have good stability and less prone to deformation.

In some embodiments, the first housing has a first wall portion, the second portion extends outside the first accommodation cavity from the first wall portion, the first wall portion has a first outer surface, and the first outer surface is a surface of the first wall portion facing away from the first accommodation cavity. The first outer surface is concave towards the first accommodation cavity to form a first mounting portion, and at least a portion of the second portion extends into the first mounting portion. The first conductive terminal is mounted on the first mounting portion and connected to the second portion, and the first conductive terminal is provided exposed relative to the first outer surface.

The electrochemical device provided in embodiments of this application achieves the current leading-in or leading-out by using the first conductive terminal instead of the first metal sheet, i.e., the electrochemical device is connected to an external power utilization load through the first conductive terminal, and thus, the problem that the first metal sheet is prone to damage due to use of the first metal sheet for connection can be alleviated. In addition, the second portion of the first metal sheet is connected to the first conductive terminal at an exterior of the first housing, so the connection process of the two is less interfered by a wall portion of the first accommodation cavity and other components within the first accommodation cavity.

In addition, the electrochemical device may not include a second housing, and thus, a structure of the electrochemical device can be simplified.

In some embodiments, the first conductive terminal includes a first base portion and a first extension portion connected to the first base portion. A portion of the first base portion is accommodated in the first mounting portion, an another portion of the first base portion extends outside the first mounting portion, and the first extension portion is formed by extending outward from an end of the first base portion facing away from the electrode assembly. At least one of the first base portion and the first extension portion is connected to the second portion. The setting of the first extension portion increases a contactable area of the first conductive terminal for a junction with the power utilization load, thereby improving a fault tolerance rate when the first conductive terminal is connected to the power utilization load.

In some embodiments, the first metal sheet is disposed insulated from the first housing.

In some embodiments, the electrochemical device is a button battery. In some embodiments, the electrochemical device is a prismatic battery.

In a second aspect, embodiments of this application further provide an electronic device, and the electronic device includes the above electrochemical device. Due to inclusion of the above electrochemical device, the electronic device can alleviate the problem that the first metal sheet of the electrochemical device within the electronic device is prone to damage.

### BRIEF DESCRIPTION OF DRAWINGS

One or more embodiments are exemplarily illustrated by accompanying drawings corresponding thereto. These exemplary illustrations do not constitute a limitation on the embodiments. Components with same reference numerals in the accompanying drawings are represented as similar components. Unless otherwise stated, the figures in the accompanying drawings do not constitute a scale limitation.
FIG. 1 is a schematic projection diagram in one direction of an electrochemical device provided in one embodiment of this application;
FIG. 2 is a schematic section diagram along an A-A line in FIG. 1;
FIG. 3 is a schematic section diagram along a B-B line in FIG. 1;
FIG. 4 is a schematic exploded diagram of the electrochemical device in FIG. 1;
FIG. 5 is a partially enlarged schematic diagram of a part C in FIG. 2;
FIG. 6 is a partially enlarged schematic diagram of a part D in FIG. 3;
FIG. 7 is a schematic diagram of a first electrode plate in a flattened state;
FIG. 8 is a schematic diagram of a second electrode plate in a flattened state;
FIG. 9 is a schematic diagram of a first conductive terminal in FIG. 4;
FIG. 10 is a schematic diagram of a second conductive terminal in FIG. 4;
FIG. 11 is a schematic diagram of a first conductive terminal of an electrochemical device in some embodiments of this application;
FIG. 12 is a schematic diagram of a first conductive terminal of an electrochemical device in some embodiments of this application;
FIG. 13 is a schematic stereoscopic diagram of an electrochemical device in some embodiments of this application;
FIG. 14 is a schematic exploded diagram of an electrochemical device in FIG. 13;
FIG. 15 is a schematic diagram of an electrochemical device provided in some embodiments of this application; and
FIG. 16 is a schematic diagram of an electronic device according to an embodiment of this application.

### Reference numerals:

1. Electrochemical device;
100. housing; 110. first housing; 120. second housing; 130. sealing element; 111. first wall portion; 112. second wall section; 113. third wall section; 121. fourth wall section; 122. fifth wall section; 1111. boss; 101. first accommodation cavity; 102. first via-hole; 103. second via-hole; 104. second accommodation cavity;
200. electrode assembly;
300. first metal sheet; 310. first portion; 320. second portion; 330. first connection section; 340. first sealing adhesive layer;
400. second metal sheet; 410. third portion; 420. fourth portion; 430. second connection section; 440. second sealing adhesive layer;
500. first conductive terminal; 510. first base portion; 520. first connection portion; 530. first extension portion;
600. second conductive terminal; 610. second base portion; 620. second connection portion; 630. second extension portion;
1b. electrochemical device; 500b. first conductive terminal; 510b. first base portion; 530b. first extension portion;
1c. electrochemical device; 500c. first conductive terminal; 510c. first base portion; 520c. first connection portion; 530c. first extension portion;
1d. electrochemical device;
100d. housing; 110d. first housing; 111d. first wall portion; 102d. first via-hole; 103d. second via-hole; 104d. first mounting portion; 105d. second mounting portion;
300d. first metal sheet; 320d. second portion; 321d. first region; 322d. second region; 323d. third region;
400d. second metal sheet; 420d. fourth portion; 421d. fourth region; 422d. fourth region; 423d. sixth region;
500d. first conductive terminal; 501d. third adhesive;
600d. second conductive terminal; 601d. fourth adhesive;
330. first connection section; 340. first sealing adhesive layer; and
2. Electronic device.

### DETAILED DESCRIPTION

For ease of understanding this application, this application is described in more detail below in conjunction with accompanying drawings and specific embodiments. It is hereby noted that when one component is expressed as being "fixed to"/"fixedly connected to" or "mounted on" another component, it may be directly on the another component, or there may be one or more components therebetween. When one component is expressed as being "connected" to another component, it may be directly connected to the another component, or there may also be one or more components therebetween. The terms "vertical", "horizontal", "left", "right", "internal", "external" and similar expressions used in the description are merely for the purpose of illustration.

Unless otherwise defined, all technical and scientific terms used in the description shall have the same meanings as commonly understood by a person skilled in the technical field to which this application belongs. The terms used in the description of this application are merely intended to describe the specific embodiments but not to limit this application. The term "and/or" used in the description includes any and all combinations of one or more of the relevant listed items.

In addition, technical features involved in the different embodiments of this application described below may be mutually combined as long as they do not conflict with each other.

In the description, the "mounting" includes fixing or limiting a component or apparatus to a specific position or place by welding, screwing, clamping, gluing, etc. The component or apparatus may remain still in the specific position or place or may move within a limited range, and the component or apparatus may or may not be dismounted after being fixed or limited to the specific position or place, which is not limited in the embodiments of this application.

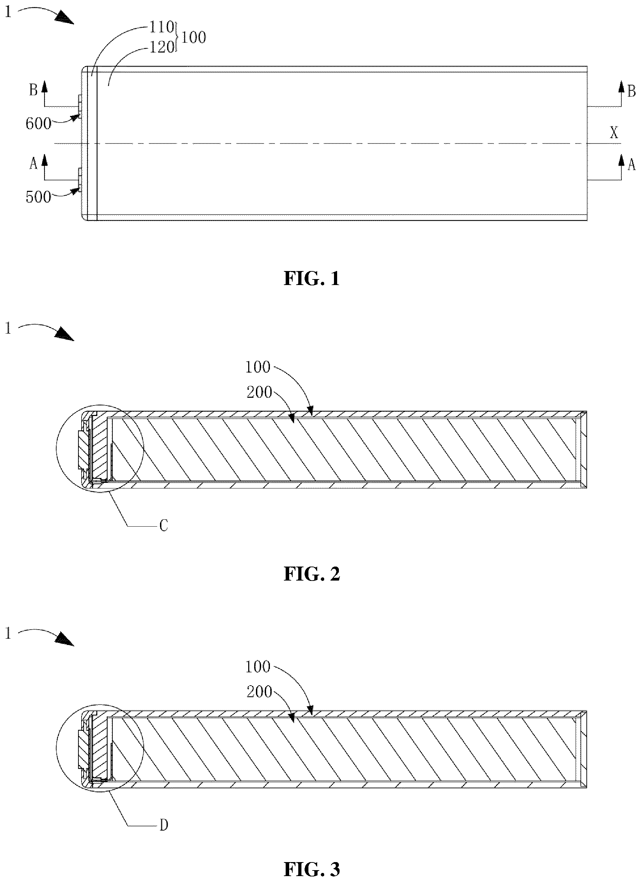

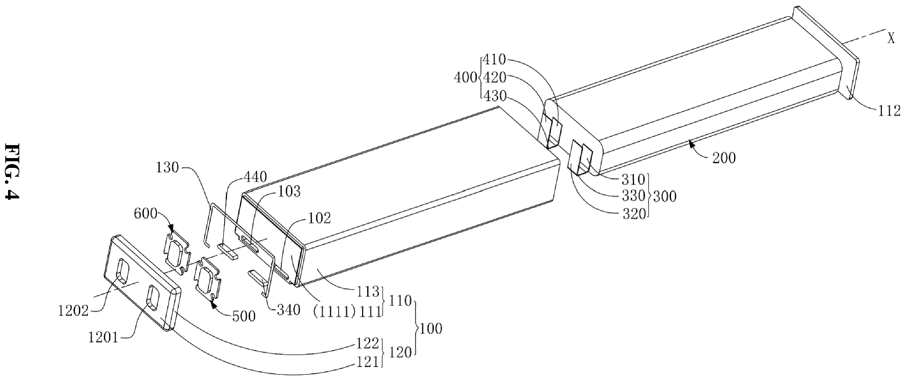

Please refer to FIGS. 1 to 4. FIG. 1 shows a schematic projection diagram in one direction of an electrochemical device 1 provided in one embodiment of this application, FIG. 2 shows a schematic section diagram along an A-A line in FIG. 1, FIG. 3 is a schematic section diagram along a B-B line in FIG. 1, and FIG. 4 shows a schematic exploded diagram of the electrochemical device 1. The electrochemical device 1 includes a housing 100, an electrode assembly 200, a first metal sheet 300, and a first conductive terminal 500. The housing 100 is a supporting mounting base of the above structure and includes a first housing 110; and the first housing 110 forms a first accommodation cavity. The electrode assembly 200 is received in the above first accommodation cavity. The first metal sheet 300 includes a first portion 310 and a second portion 320; and the first portion 310 is received in the first accommodation cavity and is electrically connected to the electrode assembly 200, and the second portion 320 extends outside the first housing 110. The first conductive terminal 500 is provided on the housing 100 and is exposed relative to an outer surface of the housing 100. The first conductive terminal 500 is electrically connected to the second portion 320, and the electrochemical device 1 achieves current leading-in or leading-out through the first conductive terminal 500. "The outer surface of the housing" mentioned in this application document refers to a surface that can be observed by a person skilled in the art from an exterior of the housing 100 when the electrochemical device 1 exists alone.

In this embodiment, the electrochemical device 1 further includes a second metal sheet 400 and a second conductive terminal 600. The second metal sheet 400 includes a third portion 410 and a fourth portion 420 connected to each other; and the third portion 410 is located in the first accommodation cavity and is electrically connected to the electrode assembly 200, and the fourth portion 420 extends outside the first housing 110. The second conductive terminal 600 is electrically connected to the fourth portion 420, and the electrochemical device 1 achieves current leading-in or leading-out through the second conductive terminal 600. Next, taking the electrochemical device 1 as an example of a lithium-ion battery, structures of the above housing 100, electrode assembly 200, first metal sheet 300, second metal sheet 400, first conductive terminal 500, and second conductive terminal 600 will be explained in sequence.

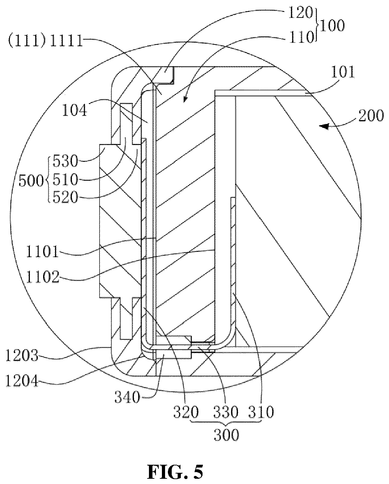

For the above housing 100, please refer to FIG. 5, which shows a partially enlarged schematic diagram of a part C in FIG. 2. In conjunction with other accompanying figures at the same time, the housing 100 is a mounting base of the electrochemical device 1 and also constitutes an external protective element of the electrochemical device 1. The housing 100 includes the first housing 110, and the first housing 110 is provided with a first accommodation cavity 101 for receiving the above electrode assembly 200.

Please refer to FIGS. 4 and 5. In some embodiments, the first housing 100 includes a first wall portion 111, a second wall portion 112 and a third wall portion 113. The first wall portion 111 and the second wall portion 112 both are in a platelike structure, and are arranged opposite each other along a first direction X as illustrated; and the first wall portion 111 is a portion of the housing 100 that allows the first metal sheet 300 to extend, and the second wall portion 112 is a portion of the housing 100 that is far away from the first metal sheet 300. The third wall portion 113 is in a hollow structure as a whole, extending from the first wall portion 111 to the second wall portion 112, and its end facing away from the first wall portion 111 is sealed by the second wall portion 112; and thus, the first wall portion 111, the second wall portion 112 and the third wall portion 113 collectively define the above first accommodation cavity 101. The above first wall portion 111 has a first outer surface 1101 and a first inner surface 1102; the first outer surface 1101 is a surface of the first wall portion 111 facing away from the first accommodation cavity 101 and is a surface that can be observed by a person skilled in the art from an exterior of the first housing 110 when the first housing 110 exists alone; and the first inner surface 1102 is a surface of the first wall portion 111 facing the above first accommodation cavity 101.

In this embodiment, the first wall portion 111 and the third wall portion 113 are integrally disposed; and for example, the two can be integrally molded by injection molding, can also be integrally molded by subtractive molding, or can further be integrally molded by 3D printing, and this application does not make limitations thereto. The second wall portion 112 and the third wall portion 113 are fixed by laser welding; and it can be understood that in other embodiments of this application, the second wall portion 112 and the third wall portion 113 can also be fixed by other means such as gluing and screwing. Optionally, the first housing 110 is in a cuboid shape as a whole; and of course, in other embodiments, the first housing 110 can also be in any other shape such as a cylindrical shape and a prismatic shape, as long as the first housing 110 can form the first accommodation cavity 101.

For the above electrode assembly 200, please continue to refer to FIG. 4. In conjunction with other accompanying figures at the same time, the electrode assembly 200 is a core part of the electrochemical device 1 for charging and discharging, is received in the first accommodation cavity 101, and includes a first electrode plate, a second electrode plate and a separator disposed in a stacking manner. Polarity of the first electrode plate is opposite to that of the second electrode plate, and a separator is disposed between the first electrode plate and the second electrode plate for separation; and for example, in some embodiments, the first electrode plate is a positive electrode plate, and the second electrode plate is a negative electrode plate, and for example, in other embodiments, the first electrode plate is a negative electrode plate and the second electrode plate is a positive electrode plate. In this embodiment, the electrode assembly 200 is in a spirally wound structure; and specifically, the electrode assembly 200 is spirally wound into a cylindrical structure with an oblong cross section, thus facilitating mounting in the above first accommodation cavity 101. Of course, in other embodiments of this application, the electrode assembly 200 can also be in a stacked structure, and this application does not specifically limit a structural form of the electrode assembly 200.

For the above first metal sheet 300, please continue to refer to FIG. 4. In conjunction with FIG. 5 at the same time, the first metal sheet 300 is electrically connected to the above electrode assembly 200, extends outside the first accommodation cavity 101 through the first wall portion 111, and is disposed insulated from the first housing 110; and correspondingly, the first wall portion 111 is provided with a first via-hole 102 for the first metal sheet 300 to pass through. Specifically, the first metal sheet 300 includes a first portion 310 and a second portion 320. The first portion 310 is received in the first accommodation cavity 101, with one end electrically connected to the above first electrode plate and the other end extending towards the above first wall portion 111 to an end of the first via-hole 102 facing the first accommodation cavity 101. The second portion 320 is located outside the first accommodation cavity 101 and is indirectly connected to the first portion 310 through a first connection section 330 passing through the above first via-hole 102. The second portion 320 is bent close to or adhered to the above first outer surface 1101 compared with the first connection section 330. Optionally, a first adhesive is disposed between the second portion 320 and the first wall portion 111 to fix the second portion 320 to the first wall portion 111.

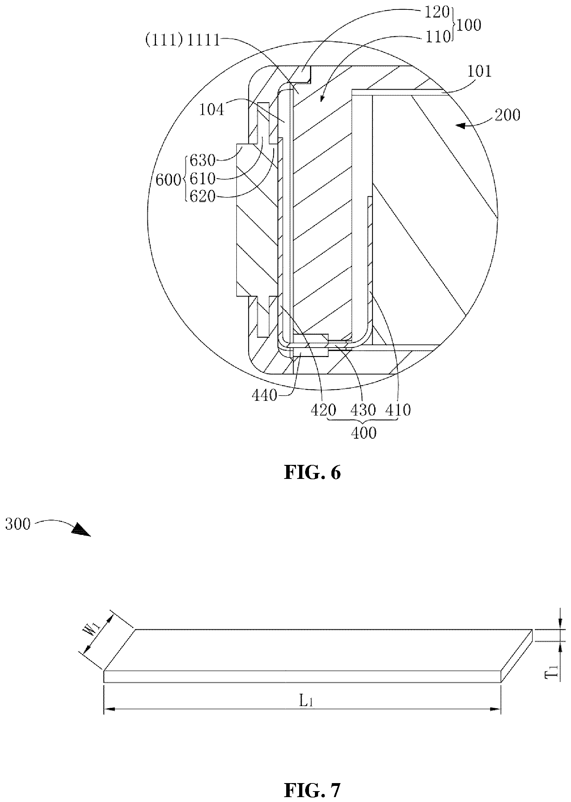

In some embodiments, the first metal sheet 300 is in a strip-shaped structure. Please refer to FIG. 7, which shows a schematic diagram of the first metal sheet 300 after being flattened. The flattened first metal sheet 300 is in a flat cuboid shape, and the first metal sheet 300 has a length of L₁ mm, a width of W₁ mm and a thickness of T₁ µm. The strip-shaped setting of the first metal sheet 300 makes it flexibly bendable within the first accommodation cavity 101, thereby facilitating extension of the first electrode plate through the above first via-hole 102.

In some embodiments, a thickness of the first metal sheet 300 satisfies: 50 µm ≤ T₁ ≤ 500 µm. The setting of the thickness T₁ not less than 50 µm aims to enable the first metal sheet 300 to have a sufficient thickness to reduce the risk that the first metal sheet is easily broken due to too low strength on the one hand, and to ensure an appropriate overcurrent capacity on the other hand, so as to meet the overcurrent requirement of the electrochemical device 1. The setting of the thickness T₁ not higher than 500 µm aims to alleviate the problem of an excessive thickness of the first metal sheet, which makes it difficult for the first metal sheet 300 to bend flexibly; and at the same time, the setting can also improve to some extent the deficiency that space available for the electrode assembly 200 is reduced due to the excessive thickness of the first metal sheet 300, thereby leading to a lower energy density in the electrochemical device 1.

In some embodiments, a width of the first metal sheet 300 is 1 mm to 20 mm, and a length-width ratio of the first metal sheet 300 ranges from 5:1 to 20:1. For example, in some possible cases, the width of the first metal sheet 300 is 10 mm, and the length of the first metal sheet 300 is 50 mm to 200 mm; and of course, the length of the first metal sheet 300 can also vary accordingly depending on the width of the first metal sheet 300. The length-width ratio of the first metal sheet 300 within the above range aims to provide the first metal sheet 300 with an appropriate length, so that on the one hand, the first metal sheet 300 can extend to an exterior of the first housing 110 from the first electrode plate, thereby facilitating connection with the above first conductive terminal 500 without extending too much length out of the first housing 110. "The length-width ratio of the first metal sheet" mentioned in this application document means a ratio of the length to width of the first metal sheet 300, i.e. L₁/W₁. The length of the first metal sheet 300 refers to a size of a long side of the first metal sheet 300; and when the first metal sheet 300 is in a flattened state, the length of the first metal sheet 300 is also a size along a direction from the first portion 310 to the second portion 320. The width of the first metal sheet 300 refers to a size of a wide side of the first metal sheet 300. When the first metal sheet 300 is in a flattened state, both the long side and wide side of the first metal sheet 300 are perpendicular to a thickness direction of the first metal sheet 300. In this application, the size can be measured by a micrometer, 10 corresponding data of a target to be measured can be measured, and then an average value is taken.

For the above second metal sheet 400, please continue to refer to FIG. 4, and at the same time, refer to FIG. 6. FIG. 6 shows a partially enlarged schematic diagram of a part D in FIG. 3. The second metal sheet 400 is electrically connected to the electrode assembly 200, extends outside the first accommodation cavity 101 through the first wall portion 111, and is insulated from the first housing 110; and correspondingly, the first housing 110 is provided with a second via-hole 103 for the second metal sheet 400 to pass through. Specifically, the second metal sheet 400 includes the third portion 410 and the fourth portion 420. The third portion 410 is received in the first accommodation cavity 101, with one end electrically connected to the above second electrode plate and the other end extending towards the above first wall portion 111 to an end of the second via-hole 103 facing the first accommodation cavity 101. The fourth portion 420 is located outside the first accommodation cavity 101 and is indirectly connected to the third portion 410 through a second connection section 430 passing through the second via-hole 103; and the fourth portion 420 is bent close to or adhered to the above first outer surface 1101 compared with the second connection section 430. Optionally, the first adhesive is provided between the fourth portion 420 and the first wall portion 111 to fix the second portion 320 to the first wall portion 111. Although in this embodiment, the second metal sheet 300 extends outside the first housing 110 from the first wall portion 111, in other embodiments, the second metal sheet 300 can also extend outside the first housing 110 from the second wall portion 112 or the third wall portion 113.

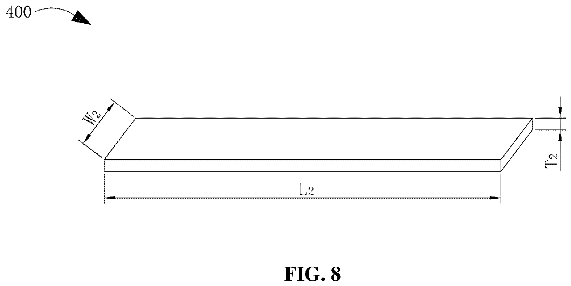

In some embodiments, the second metal sheet 400 is a strip-shaped structure. Please refer to FIG. 8, which shows a schematic diagram of the second metal sheet 400 after being flattened. The flattened second metal sheet 400 is in a flat cuboid shape, and the second metal sheet 400 has a length of L₂ mm, a width of W₂ mm and a thickness of T₂ µm. The strip-shaped setting of the second metal sheet 400 makes it flexibly bendable within the first accommodation cavity 101, thereby facilitating extension of the second electrode plate through the above second via-hole 103.

In some embodiments, a thickness of the second metal sheet 400 satisfies: 50 µm ≤ T₂ ≤ 500 µm. The setting of the thickness T₂ not less than 50 µm aims to enable the second metal sheet 400 to have a sufficient thickness to reduce the risk that the first metal sheet is easily broken due to too low strength on the one hand, and to ensure an appropriate overcurrent capacity on the other hand, so as to meet the overcurrent requirement of the electrochemical device 1. The setting of the thickness T₂ not higher than 500 µm aims to alleviate the problem of an excessive thickness of the first metal sheet, which makes it difficult for the second metal sheet 400 to bend flexibly; and at the same time, the setting can also improve to some extent the deficiency that space available for the electrode assembly 200 is reduced due to the excessive thickness of the second metal sheet 400, thereby leading to a lower energy density in the electrochemical device 1.

In some embodiments, a width of the second metal sheet 400 is 1 mm to 20 mm, and a length-width ratio of the second metal sheet 400 ranges from 5:1 to 20:1. For example, in some possible cases, the width of the second metal sheet 400 is 10 mm, and the length of the second metal sheet 400 is 50 mm to 200 mm; and of course, the length of the second metal sheet 400 can also vary accordingly depending on the width of the second metal sheet 400. The length-width ratio of the second metal sheet 400 within the above range aims to provide the second metal sheet 400 with an appropriate length, so that on the one hand, the second metal sheet 400 can extend to an exterior of the first housing 110 from the first electrode plate, thereby facilitating connection with the above second conductive terminal 600 without extending too much length out of the first housing 110 and causing waste. "The length-width ratio of the second metal sheet" mentioned in this application document means a ratio of the length to the width of the second metal sheet 400, i.e. L₂/W₂. The length of the second metal sheet 400 refers to a size of a long side of the second metal sheet 400; and when the second metal sheet 400 is in a flattened state, the length of the second metal sheet 400 is also a size along a direction from the first portion 310 to the second portion 320. The width of the second metal sheet 400 refers to a size of a wide side of the second metal sheet 400. When the second metal sheet 400 is in a flattened state, both the long side and wide side of the second metal sheet 400 are perpendicular to a thickness direction of the second metal sheet 400.

In some embodiments, to achieve sealing of the above first via-hole 102 and the above second via-hole 103, the electrochemical device 1 further includes a first sealing layer 340 and a second sealing layer 440. Specifically, please continue to refer to FIG. 4. The first sealing layer 340 is filled in the first via-hole 102 to seal the first via-hole 102; and the second sealing layer 440 is filled in the second via-hole 103 to seal the second via-hole 103. Optionally, the first sealing layer 340 includes a polymer material; and for example, the first sealing layer 340 can be filled into the first via-hole 102 in a fluid state, and after the first sealing layer is cured, the sealing of the first via-hole 102 can be achieved. Optionally, the second sealing layer 440 includes a polymer material; and for example, the first sealing layer 340 can be filled into the second via-hole 103 in a fluid state, and after the first sealing layer is cured, the sealing of the second via-hole 103 can be achieved.

For the above first conductive terminal 500 and the above second conductive terminal 600, please refer to FIG. 4 first. In conjunction with other accompanying figures at the same time, both the first conductive terminal 500 and the second conductive terminal 600 are disposed on the housing 100 and are disposed at least partially exposed relative to the outer surface of the housing 100. The first conductive terminal 500 is electrically connected to the second portion 320 of the first metal sheet 300, and the second conductive terminal 600 is electrically connected to the fourth portion 420 of the second metal sheet 400; and in this way, the first conductive terminal 500 is connected to the first metal sheet 300 outside the first accommodation cavity 101, the second conductive terminal 600 is connected to the second metal sheet 400 outside the first accommodation cavity 101, and the both respectively constitute two conductive terminals of the electrochemical device 1 for connecting with an external power utilization load.

Considering that the first metal sheet 300 and the second metal sheet 400 have a strip-shaped structure and a small thickness, portions of the both extending outside the first housing 100 are prone to damage due to contacts of external objects and are also prone to breakage when the electrochemical device 1 falls. At the same time, the sealing performance at the first via-hole 102 and the second via-hole 103 may also be affected. To overcome the above shortcomings, the housing 100 of the electrochemical device 1 further includes a second housing 120. Specifically, in conjunction with FIGS. 4 to 6, the second housing 120 is provided on the above first wall portion 111 and forms a second accommodation cavity 104 together with the first wall portion 111; and the second portion 320 and the fourth portion 420 are provided in the second accommodation cavity 104. In this way, the housing 100 isolates the second portion 320 and the fourth portion 420 from an external environment, thus making the second portion 320 and the fourth portion 420 less susceptible to collisions from external objects.

The second housing 120 has a second outer surface 1203 and a second inner surface 1204; the second outer surface 1203 is a surface of the second housing 120 facing away from the above second accommodation cavity 104, which is a surface that can be observed by a person skilled in the art from an exterior of the housing 100 after the second housing 110 is assembled with the first housing 110; and the second inner surface 1204 is a surface of the second housing 120 facing the above second accommodation cavity 104. The second outer surface 1203 is provided with a first hole 1201, and the first conductive terminal 500 is provided in the first hole; and a portion of the first conductive terminal 500 facing the first wall portion 111 is connected to the second portion 320, and a portion of the first conductive terminal 500 facing away from the first wall portion 111 is exposed relative to the second outer surface 1203 through the first hole 1201, thus facilitating connection with the power utilization load. The second outer surface 1203 is also provided with a second hole 1202, and the second conductive terminal 600 is provided in the second hole 1202; the second conductive terminal 600 is provided in the second hole 1202; and a portion of the second conductive terminal 600 facing the first wall portion 111 is connected to the fourth portion 420, and a portion of the second conductive terminal 600 facing away from the first wall portion 111 is exposed relative to the second outer surface 1203 through the second hole 1202, thus facilitating connection with the power utilization load.

Next, a supplementary explanation will be provided on a specific structure of the second housing 120 in this embodiment. The second housing 120 includes a fourth wall portion 121 and a fifth wall portion 122. The fourth wall portion 121 is provided opposite to the first wall portion 111; and the fifth wall portion 122 is located on a side of the fourth wall portion 121 facing the first wall portion 111 and is formed by extending from an edge of the fourth wall portion 121, and the fifth wall portion 122 and the fourth wall portion 121 define a concave cavity together. One end of the first wall portion 111 facing the fourth wall portion 121 has a boss 1111, and the above first via-hole 102 and the above second via-hole 103 are located on the boss 1111. The boss 1111 extends into the concave cavity formed in the second housing 120 and is in interference fit with the fifth wall portion 122, and at the same time, there is a certain gap between the fourth wall portion 121 and the protrusion 1111; and the second housing 120 is disposed covering the boss 1111 as a whole and defines the second accommodation cavity 104 together with the first housing 110. The second housing 120 covers the first outer surface 1101, so that the second housing 120 and the first housing 110 are connected in a continuous cuboid shape. In some embodiments, the second accommodation cavity 104 can be integrated with the first accommodation cavity 101, i.e., the second accommodation cavity 104 is in communication with the first accommodation cavity 101. In some embodiments, the second accommodation cavity 104 can be separated from the first accommodation cavity 101, i.e., the second accommodation cavity 104 is not in communication with the first accommodation cavity 101, and the first accommodation cavity and the second accommodation cavity are two independent cavities.

In some embodiments, a sealing element 130 is provided at a junction between the second housing 120 and the first housing 110 to seal the junction. Optionally, the sealing element is a solid sealant; and after the second housing 120 is plugged into the first housing 110, a liquid sealant is injected into the junction between the two, and the liquid sealant fills a gap between the second housing 120 and the first housing 110 and is gradually cured to form the above solid sealant. In this way, the sealing element 130 not only functions to seal the junction between the first housing 110 and the second housing 120, but also serves to bond and fix the two. Of course, in other embodiments of this application, the second housing 120 and the first housing 110 can also be connected in other ways as long as the two are fixed to each other; for example, in some embodiments, the second housing 120 and the first housing 110 are fixed only by interference fit; and for example, in other embodiments, the second housing 120 and the first housing 110 are fixed only by adhesive bonding.

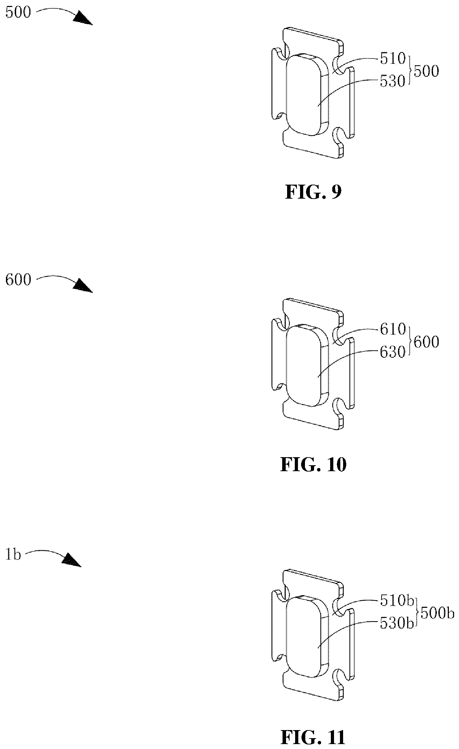

Please refer to FIG. 9, which shows a schematic diagram of the first conductive terminal 500. In conjunction with FIG. 5 and other accompanying figures at the same time, the first conductive terminal 500 is a structure in which polarity of the electrode assembly 200 is led out in the electrochemical device 1 and is made of a conductive substance. For example, when the first conductive terminal 500 is electrically connected to the positive electrode plate, the first conductive terminal 500 can include any one of aluminum, aluminum alloy, nickel, or nickel alloy. Of course, the first conductive terminal 500 can also include other metallic or non-metallic conductor materials. Additionally, for example, when the first conductive terminal 500 is electrically connected to the negative electrode plate, the first conductive terminal 500 can include any one of copper, copper alloy, nickel, or nickel alloy. Of course, the first conductive terminal 500 can also include other metallic or non-metallic conductor materials.

The first conductive terminal 500 includes a first base portion 510, a first connection portion 520 and a first extension portion 530. The first base portion 510 is flat, embedded and fixed in the second housing 120, and is not exposed relative to a surface of the second housing 120. The first connection portion 520 is provided on a side of the first base portion 510 facing the above first housing 110, and its edge contour is disposed relatively contracted relative to an edge contour of the first base portion 510. The first connection portion 520 is disposed exposed relative to the inner surface of the second housing 120, and is welded and fixed to the above second portion 320, thus achieving electrical connection between the first conductive terminal 500 and the first metal sheet 300; and i.e., the first base portion 510 is indirectly electrically connected to the first metal sheet 300 through the first connection portion 520. Of course, in other embodiments of this application, the first connection portion 520 can also be bonded to the second portion 320 or abut on the second portion 320, as long as the two can be electrically connected to each other. The first extension portion 530 is provided on a side of the first base portion 510 facing away from the first housing 110 and is disposed at least partially exposed relative to the second outer surface 1203, thereby facilitating connection with the power utilization load.

Optionally, the first conductive terminal 500 and the second housing 120 are integrally disposed. Specifically, the first conductive terminal 500 is placed as an insert into an injection mold, the mold is filled with a molten polymer material, and after cooling and curing, the second housing 120 is formed; and i.e., the first conductive terminal 500 and the second housing 120 are integrally molded by injection molding. The first conductive terminal 500 can be separately placed in the mold, and after being integrally molded with the second housing 120, the first conductive terminal is connected to the second portion 320; or after the first conductive terminal is connected to the second portion 320, the first housing 110 and the first conductive terminal 500 received in the electrode assembly 200 can be integrally placed into a mold for injection molding, thus obtaining the first conductive terminal 500 and the second housing 120 that are integrally disposed. The integrated setting mode of the first conductive terminal 500 and the second housing 120 makes the first conductive terminal 500 have good stability and less prone to deformation.

Please refer to FIG. 10, which shows a schematic diagram of the second conductive terminal 600. In conjunction with FIG. 6 and other accompanying figures, the second conductive terminal 600 is a structure in which the polarity of the electrode assembly 200 is led out in the electrochemical device 1 and made of a conductive substance. For example, when the second conductive terminal 600 is electrically connected to the negative electrode plate, the second conductive terminal 600 can include any one of copper, copper alloy, nickel, or nickel alloy. Of course, the second conductive terminal 600 can also include other metallic or non-metallic conductor materials. Additionally, for example, when the second conductive terminal 600 is electrically connected to the positive electrode plate, the second conductive terminal 600 can include any one of aluminum, aluminum alloy, nickel, or nickel alloy. Of course, the second conductive terminal 600 can also include other metallic or non-metallic conductor materials.

The second conductive terminal 600 includes a second base portion 610, a second connection portion 620 and a second extension portion 630. The second base portion 610 is flat and embedded in the second housing 120 and is not exposed relative to a surface of the second housing 120. The second connection portion 620 is provided on a side of the second base portion 610 facing the above first housing 110 and is disposed exposed relative to the inner surface of the second housing 120; the second connection portion 620 is welded and fixed to the above fourth portion 420, thus achieving electrical connection between the second conductive terminal 600 and the second metal sheet 400; and of course, in other embodiments of this application, the second connection portion 620 can also be bonded to the fourth portion 420 or abut on the fourth portion 420, as long as electrical connection between the two is ensured. The second extension portion 630 is provided on a side of the second base portion 610 facing away from the first housing 110 and is disposed exposed relative to the second outer surface 1203, thereby facilitating connection with the power utilization load.

Optionally, the second conductive terminal 600 and the second housing 120 are integrally disposed. Specifically, the first conductive terminal 500 and the second conductive terminal 600 are placed as inserts into a mold, the mold is filled with a molten polymer material, and after cooling and curing, the second housing 120 is formed; and i.e., the first conductive terminal 500, the second conductive terminal 600 and the second housing 120 are integrally molded by injection molding. The first conductive terminal 500 and the second conductive terminal can be first placed together in the mold, and after being integrally molded with the second housing 120, the two are connected to the second portion 320 and the fourth portion 420 correspondingly; or after the two are connected to the second portion 320 and the fourth portion 420, the first housing 110, the first conductive terminal 500 and the second conductive terminal 600 received in the electrode assembly 200 can be integrally placed into the mold for injection molding, thus obtaining the first conductive terminal 500, the second conductive terminal 600 and the second housing 120 that are integrally disposed.

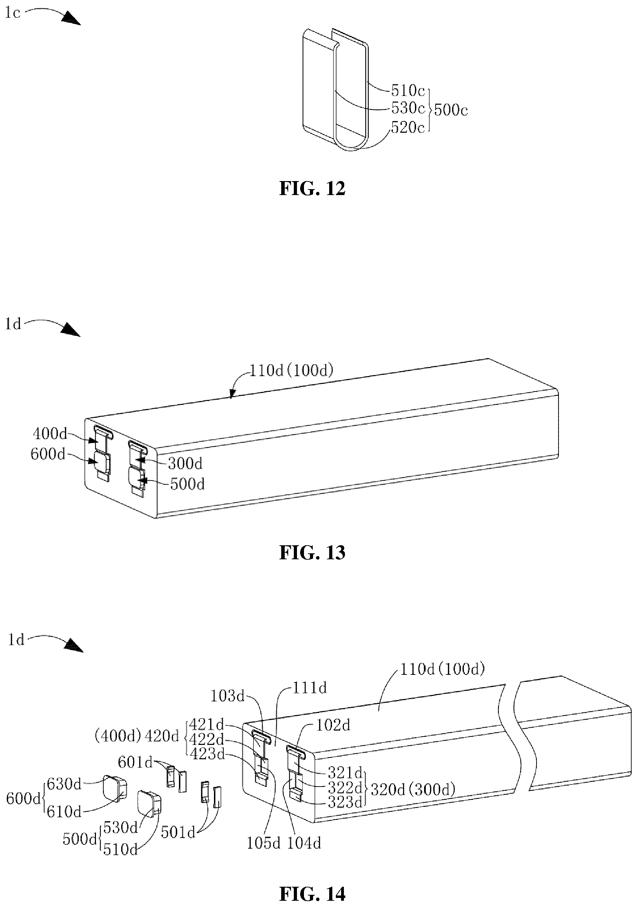

It should be understood that even though a shape of the first conductive terminal 500 is set as above in this embodiment, this application is not limited to this, and the shape of the first conductive terminal 500 is actually diverse. For example, FIG. 11 shows a schematic diagram of a first conductive terminal 500b in an electrochemical device 1b provided by some embodiments of this application. The main difference between the first conductive terminal 500b and the first conductive terminal 500 in the previous embodiments is that the first conductive terminal 500b still includes a first base portion 510b and the first extension portion 530b, and no longer includes the above first connection portion; and the first conductive terminal 500b is directly connected to the above second portion through the first base portion 510b. For example, FIG. 12 shows a schematic diagram of a first conductive terminal 500c in an electrochemical device 1c provided by some embodiments of this application. The first conductive terminal 500c is in a broken ring shape and embedded in the second housing 120, and includes a first base portion 510c, a first connection portion 520c and a first extension portion 530c. The first base portion 510c is fixed to the second housing 120 and is disposed exposed relative to the inner surface of the second housing 120, and the first base portion 510c is connected to the above second portion 320. The first extension portion 530c is disposed opposite the first base portion, is located on a side of the first base portion 510c facing away from the second portion 320, and is disposed exposed relative to the second outer surface 1203. The first connection portion 520c is located between the first base portion 510c and the first extension portion 530c, and is connected to the first base portion 510c and the first extension portion 530c each. Therefore, it can be seen that the shape of the first conductive terminal 500 is actually diverse, and will not be further elaborated here. Similarly, the shape of the second conductive terminal 600 is actually diverse, and its specific structural design can refer to the first conductive terminal 500, which will not be elaborated here by way of example.

In this embodiment, an example in which the second housing 120 is provided with a concave cavity, and the second portion 320 and the fourth portion 420 are provided in the concave cavity is used for illustration, but this application is not limited thereto, as long as it is ensured that the second accommodation cavity 104 is defined between the second housing 120 and the first wall portion 111 to receive the second portion 320 and the fourth portion 420, thereby providing isolation and protection for the second portion 320 and the fourth portion 420. For example, in some embodiments, the concave cavity can also be provided on a surface of the first wall portion 111 facing the second housing 120, and the second housing 120 is disposed covering an opening of the concave cavity, so that the second housing 120 and the first housing 110 jointly define the above second accommodation cavity 104, and the second portion 320 and the fourth portion 420 are provided within the second accommodation cavity 104. For example, in some embodiments, both the second housing 120 and the first wall portion 111 are provided with concave cavities, and the two concave cavities jointly constitute the above second accommodation cavity 104; and the second portion 320 and the fourth portion 420 are provided within the second accommodation cavity 104.

The electrochemical device 1 provided in the embodiments of this application includes a housing 100, an electrode assembly 200, a first metal sheet 300, and a first conductive terminal 500. The first metal sheet 300 includes a second portion 320 extending outside the housing 100. The first conductive terminal 500 is provided on the housing 100 and is at least partially exposed relative to the outer surface of the housing 100; and the first conductive terminal 500 is connected to the above second portion 320.

In the related art, the electrochemical device adopts a solution in which the first metal sheet extends outside the housing and directly serves as a structure for current leading-in and leading-out of the electrochemical device. However, since the first metal sheet is strip-shaped, its end face area is extremely small, which also means that a surface of the first metal sheet defined by the long side and the wide side of the first metal sheet, i.e., a side of the first metal sheet, needs to be used to connect with the power utilization load, and this needs to ensure that the first metal sheet extends a sufficient length from the housing. In addition, because the first metal sheet is strip-shaped and has high flexibility, it is prone to bending or even breaking during assembly and transportation of the electrochemical device, and especially in scenarios where the electrochemical device needs to be frequently disassembled and assembled, the probability of the first metal sheet being damaged or broken is higher, which will reduce the normal service life of the electrochemical device. At the same time, because the flexibility of the first metal sheet is high, adopting a solution in which the first metal sheet directly abuts on a terminal on the power utilization load has high unreliability. Therefore, the two need to be fixed by external equipment welding and other processes. On the one hand, the welding process will prolong an assembly cycle of the electrochemical device and the power utilization load, and on the other hand, introduction of welding equipment will also increase an assembly cost of the electrochemical device and the power utilization load.

In contrast, the electrochemical device 1 provided in the embodiments of this application achieves the current leading-in or leading-out by using the first conductive terminal 500 instead of the first metal sheet 300, i.e., the electrochemical device 1 is connected to the external power utilization load through the first conductive terminal 500, and thus, the electrochemical device 1 can alleviate the problem that the first metal sheet 300 is prone to damage due to use of the first metal sheet 300 to connect the load.

In addition, in the embodiments of this application, an exposed region of the first conductive terminal 500 relative to the housing 100 is not in a strip structure. The first conductive terminal 500 can not extend outside the outer surface of the housing 100, or only slightly extend outside the outer surface of the housing 100; and for example, in some embodiments, the first conductive terminal 500 extends 0.5 mm relative to the outer surface of the housing 100. Therefore, compared with a solution in which the first metal sheet is directly extended from the housing to serve as a conductive terminal, the first metal sheet 300 provided in the embodiments of this application can have a reduced risk of bending or breaking. The electrochemical device 1 can also achieve electrical connection between the electrochemical device 1 and the first conductive terminal 500 by a solution in which the first conductive terminal 500 abuts on the terminal of the power utilization load, which makes an assembly method of the electrochemical device 1 more diverse; and when the electrochemical device 1 is connected to the power utilization load using an abutting solution, it can shorten an assembly cycle between the electrochemical device 1 and the power utilization load and save an assembly cost.

In addition, compared with a solution in which the first metal sheet 300 and the first conductive terminal 500 are connected in the first accommodation cavity 101, in the embodiments of this application, the second portion 320 of the first metal sheet 300 is connected to the first conductive terminal 500 at the exterior of the first housing 110, so connection of the two is less interfered by a wall portion of the first accommodation cavity 101 and other components within the first accommodation cavity 101. Accordingly, the structure of the electrochemical device 1 is simpler.

It should be understood that even though the second portion 320 and the fourth portion 420 are both provided within the above second accommodation cavity 104 in the above embodiments, this application is not limited thereto. For example, in some embodiments, the fourth portion 420 may also be provided outside the second accommodation cavity 104 and exposed relative to the housing 100; and at this time, the second housing 120 still provides protection for the first metal sheet 300. For example, in some embodiments, the housing 100 further includes a third housing, the third housing and the first housing jointly define a third accommodation cavity; and the fourth portion 420 can also be provided in the third accommodation cavity, i.e., outside the second accommodation cavity 104.

Please refer to FIGS. 13 and 14, which respectively show a schematic stereoscopic diagram and a schematic exploded diagram of an electrochemical device 1d provided by some embodiments of this application. The electrochemical device 1d still includes a housing 100d, an electrode assembly, a first metal sheet 300d, a second metal sheet 400d, a first conductive terminal 500d, and a second conductive terminal 600d. The housing 100d includes a first housing 110d, and the first housing 110d has a first wall portion 111d; and a second portion 320d of the first metal sheet 300d and a fourth portion 420d of the second metal sheet 400d extend outside the first housing 110d through the first wall portion 111d.

The main difference between this electrochemical device 1d and the above electrochemical device 1 is that:

in the electrochemical device 1, the housing 100 further includes a second housing 120, the second housing 120 and the first wall portion 111 jointly define the second accommodation cavity 104, and the second portion 320 and the fourth portion 420 are provided in the second accommodation cavity 104; and therefore, the second portion 320 and the fourth portion 420 are not easily touched by objects outside of the electrochemical device 1.

In the electrochemical device 1d, the housing 100d no longer includes the second housing provided on the first wall portion 111d; correspondingly, an outer surface of the first wall portion 111d is concave towards the above first accommodation cavity to form a first mounting portion 104d and a second mounting portion 105d; at least a portion of the above second portion 320d extends into the first mounting portion 104d, the first conductive terminal 500d is mounted on the first mounting portion 104d and connected to the second portion 320d; and at least a portion of the fourth portion 420d extends into the second mounting portion 105d, and the second conductive terminal 600d is mounted on the second mounting portion 105d and connected to the fourth portion 420d.

Specifically, the second portion 320d of the first metal sheet 300d includes a first region 321d, a second region 322d and a third region 323d. The first region 321d is located between a first via-hole 102d and the first mounting portion 104d, and is disposed close to or attached to a surface of the first wall portion 111d. The second region 322d is integrally disposed in a U-shape and extends into the first mounting portion 104d. The third region 323d is located outside the first mounting portion 104d, and is close to or attached to the first wall portion 111d.

The fourth portion 420d of the second metal sheet 400d includes a fourth region 421d, a fifth region 422d and a sixth region 423d. The fourth region 421d is located between a second via-hole 103d and the second mounting portion 105d, and is disposed close to or attached to the surface of the first wall portion 111d. The fifth region 422d is integrally disposed in a U-shape and extends into the second mounting portion 105d. The sixth region 423d is located outside the second mounting portion 105d, and is close to or attached to the first wall portion 111d.

The first conductive terminal 500d is mounted on the first mounting portion 104d and connected to the second portion 320, which is used for electrical connection with the power utilization load. A third adhesive 501d fills between the first conductive terminal 500d and an inner wall of the first mounting portion 104d, thus bonding and fixing the first conductive terminal 500d to the housing 100d. In this embodiment, a portion of the first conductive terminal 500d extends outside the first mounting portion 104d; and in this way, the first conductive terminal 500d is disposed convex outwardly relative to the housing 100d, thus facilitating connection with the external power utilization load.

Optionally, the first conductive terminal 500d includes a first base portion 510d and a first extension portion 530d. A portion of the first base portion 510d is received in the above first mounting portion 104d, and another portion of the first base portion 510d extends outside the first mounting portion 104d. The first extension portion 530d is formed by extending outward from an end of the first base portion 510d facing away from the electrode assembly; and at least one of the first base portion 510d and the first extension portion 530d is connected to the second portion 320d. On the one hand, the setting increases a contactable area of the first conductive terminal 500d for a junction with the power utilization load, thereby improving a fault tolerance rate when the first conductive terminal 500d is connected to the power utilization load; and on the other hand, the setting allows that in a process of filling the third adhesive 501d, even if the third adhesive 501d overflows outside the first mounting portion 104d, the third adhesive 501d will still mostly fill between the first extension portion 530d and the first wall portion 111d, which can thus reduce the risk that the third adhesive 501d flows to a surface of the first extension portion 530d facing away from the first base portion 510d, thereby reducing a contactable area between the first conductive terminal 500d and the power utilization load. Further optionally, the third adhesive 501d also fills between the first extension portion 530d and the first wall portion 111d; and the setting can improve connection strength between the first conductive terminal 500d and the housing 100d.

The second conductive terminal 600d is mounted on the second mounting portion 105d and connected to the fourth portion 420d, which is used for electrical connection with the power utilization load. A fourth adhesive 601d fills between the second conductive terminal 600d and an inner wall of the second mounting portion 105d, thus bonding and fixing the second conductive terminal 600d to the housing 100d. In this embodiment, a portion of the second conductive terminal 600d extends outside the second mounting portion 105d; and in this way, the second conductive terminal 600d is disposed convex outwardly relative to the housing 100d, thus facilitating connection with the external power utilization load.

Optionally, the second conductive terminal 600d includes a second base portion 610d and a second extension portion 630d. A portion of the second base portion 610d is received in the above second mounting portion 105d, and another portion of the second base portion 610d extends outside the second mounting portion 105d. The second extension portion 630d is formed by extending outward from an end of the second base 610d facing away from the electrode assembly; and at least one of the second base portion 610d and the second extension portion 630d is connected to the fourth portion 420d. On the one hand, the setting increases a contactable area of the second conductive terminal 600d for a junction with the power utilization load, which can thereby improve a fault tolerance rate when the second conductive terminal 600d is connected to the power utilization load; and on the other hand, the setting allows that in a process of filling the fourth adhesive 601d, even if the fourth adhesive 601d overflows outside the second mounting portion 105d, the fourth adhesive 601d will still mostly fill between the second extension portion 630d and the first wall portion 111d, which can thus reduce the risk that the fourth adhesive 601d flows to a surface of the second extension portion 630d facing away from the second base portion 610d, thereby reducing a contactable area between the second conductive terminal 600d and the power utilization load. Further optionally, the fourth adhesive 601d also fills between the second extension portion 630d and the first wall portion 111d; and the setting can improve connection strength between the second conductive terminal 600d and the housing 100d.

In summary, since the electrochemical device 1d provided in the embodiments of this application achieves the current leading-in or leading-out by using the first conductive terminal 500d instead of the first metal plate 300d, i.e., the electrochemical device 1d is connected to the external power utilization load through the first conductive terminal 500d, and thus, the electrochemical device 1d can alleviate the problem that the first metal sheet 300d is prone to damage due to use of the first metal sheet 300d to connect the power utilization load.

In addition, in the electrochemical device 1d provided in this embodiment, the second portion 320d of the first metal sheet 300d is connected to the first conductive terminal 500d at the exterior of the first housing 110d, so a connection process of the two is less interfered by a wall portion of the first accommodation cavity and other components within the first accommodation cavity.

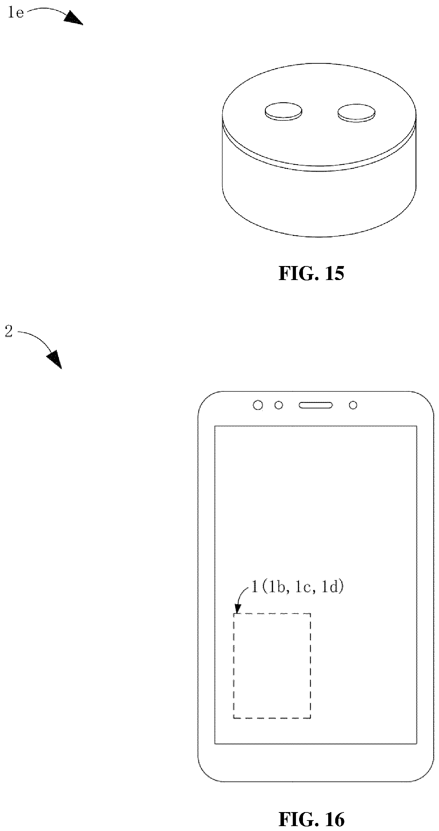

Regarding the electrochemical device, it is worth mentioning finally that this application does not limit the specific shape of the electrochemical device, and the electrochemical device can be either the prismatic battery 1 (or 1b or 1c or 1d) as provided in the above embodiments, or the button battery 1e as shown in FIG. 15.

Please refer to FIG. 16, which shows an electronic device 2 provided in one embodiment of this application. The electronic device 2 includes the electrochemical device 1 (or 1b or 1c or 1d or 1e) described in any of the above embodiments. In this embodiment, the electronic device 2 is a mobile phone; and it can be understood that in other embodiments of this application, the electronic device 2 can also be other electronic equipment that requires electric drive, such as a tablet computer, a computer and an unmanned aerial vehicle.

Due to inclusion of the above electrochemical device 1, the electronic device 2 can alleviate the problem that the first metal sheet 300 of the electrochemical device within the electronic device is prone to damage.

Finally, it is hereby noted that the foregoing embodiments are merely intended to illustrate technical solutions of this application rather than to limit this application; under the thought of this application, technical features in the foregoing embodiments or different embodiments may also be combined, steps may be implemented in any orders, and there are many other changes in different aspects of this application as described above, which are not provided in detail for the sake of brevity; although this application is illustrated in detail with reference to the foregoing embodiments, a person of ordinary skill in the art understands that he may still make modifications to the technical solutions recited in the foregoing embodiments or make equivalent replacements to some of the technical features; however, these modifications or replacements do not make the essence of the corresponding technical solution depart from the scope of the technical solutions of the embodiments.

## Claims

1. An electrochemical device, **characterized in that**, the electrochemical device comprises:
a housing, comprising a first housing, wherein the first housing forms a first accommodation cavity;
an electrode assembly, accommodated within the first accommodation cavity;
a first metal sheet, comprising a first portion and a second portion connected to the first portion, wherein the first portion is accommodated within the first accommodation cavity and electrically connected to the electrode assembly, and the second portion extends outside the first housing; and
a first conductive terminal, provided on the housing and exposed relative to an outer surface of the housing, the first conductive terminal is electrically connected to a portion of the second portion extending outside the first housing, and the electrochemical device achieves current leading-in or leading-out through the first conductive terminal.

2. The electrochemical device according to claim 1, **characterized in that**, the first housing has a first wall portion, and the second portion extends outside the first accommodation cavity from the first wall portion;
the housing further comprises a second housing connected to the first housing, the second housing and the first wall portion define a second accommodation cavity, and the second portion is provided within the second accommodation cavity;
the second housing has a second outer surface, the second outer surface is a surface of the second housing facing away from the second accommodation cavity; and
the first conductive terminal is provided on the second housing and exposed relative to the second outer surface.

3. The electrochemical device according to claim 2, **characterized in that**, the second housing is fixedly connected to the first housing.

4. The electrochemical device according to claim 2, **characterized in that**, the first wall portion has a first outer surface, the first outer surface is a surface of the first wall portion facing away from the first accommodation cavity; and
the second housing covers the first outer surface.

5. The electrochemical device according to claim 1, **characterized in that**, a thickness of the first metal sheet ranges from 50 µm to 500 µm.

6. The electrochemical device according to claim 1, **characterized in that**, the first metal sheet is strip-shaped, and a length-width ratio of the first metal sheet ranges from 5:1 to 20:1.

7. The electrochemical device according to claim 2, **characterized in that**,
the first conductive terminal comprises a first base portion and a first extension portion connected to the first base portion, the first base portion is fixed to the second housing and electrically connected to the second portion, the first extension portion is provided on a side of the first base portion facing away from the first housing, and the first extension portion is provided exposed with respect to the second outer surface; or
the first conductive terminal is in a broken ring shape and comprises a first base portion, a first connection portion and a first extension portion connected in sequence, the first base portion is connected to the second portion, the first connection portion is in a curved shape, the first extension portion is provided opposite to the first base portion and is provided on a side of the first base portion facing away from the first wall portion, and the first extension portion is provided exposed relative to the second outer surface.

8. The electrochemical device according to claim 2, **characterized in that**, the first conductive terminal is integrated with the second housing.

9. The electrochemical device according to claim 1, **characterized in that**, the first housing has a first wall portion, the second portion extends outside the first accommodation cavity from the first wall portion, the first wall portion has a first outer surface, and the first outer surface is a surface of the first wall portion facing away from the first accommodation cavity;
the first outer surface is concave towards the first accommodation cavity to form a first mounting portion, at least a portion of the second portion extends into the first mounting portion; and
the first conductive terminal is mounted on the first mounting portion and connected to the second portion, and the first conductive terminal is provided exposed relative to the first outer surface.

10. The electrochemical device according to claim 9, **characterized in that**, the first conductive terminal comprises a first base portion and a first extension portion connected to the first base portion;
a portion of the first base portion is accommodated in the first mounting portion, an another portion of the first base portion extends outside the first mounting portion, the first extension portion is formed by extending outward from an end of the first base portion facing away from the electrode assembly; and
at least one of the first base portion and the first extension portion is connected to the second portion.

11. The electrochemical device according to any one of claims 1 to 10, **characterized in that**, the first metal sheet is provided insulated from the first housing.

12. The electrochemical device according to any one of claims 1 to 10, **characterized in that**, the electrochemical device is a button battery.

13. The electrochemical device according to any one of claims 1 to 10, **characterized in that**, the electrochemical device is a prismatic battery.

14. An electronic device, **characterized in that**, the electronic device comprises an electrochemical device according to any one of claims 1 to 13.
